# EUROPÄISCHE PATENTSCHRIFT

(11) **EP 2 725 952 B1**
(45) Veröffentlichungstag und Bekanntmachung des Hinweises auf die Patenterteilung: **20.04.2016**
(21) Anmeldenummer: 12737202.7
(22) Anmeldetag: 28.06.2012
(51) Int. Cl.: A47J 31/60, C11D 17/00

(54) **REINIGUNGSSYSTEM FÜR EINE KAFFEEMASCHINE ODER EINE ÄHNLICHE EINRICHTUNG**
CLEANING SYSTEM FOR A COFFEE MACHINE OR A SIMILAR DEVICE
SYSTÈME DE NETTOYAGE POUR MACHINE À CAFÉ OU DISPOSITIF ANALOGUE

(30) Priorität: 30.06.2011 CH 11102011
(43) Veröffentlichungstag der Anmeldung: 07.05.2014
(73) Patentinhaber: Steiner AG Weggis, 6353 Weggis (CH)
(72) Erfinder: STEINER, Adrian, CH-6353 Weggis (CH)
(74) Vertreter: Luchs, Willi
(86) Internationale Anmeldenummer: PCT/EP2012/002716
(87) Internationale Veröffentlichungsnummer: WO 2013/000573

(56) Entgegenhaltungen:
- EP-A1- 1 210 894
- DE-A1-102005 025 964
- DE-A1-102006 060 745

## Beschreibung

Die Erfindung betrifft ein Reinigungssystem für eine Kaffeemaschine oder eine ähnliche Einrichtung, mit einem Reinigungskreislauf, in dem der Reinigungsflüssigkeit ein vorzugsweise lösliches Reinigungsmittel zugeführt wird.

Einrichtungen dieser Art müssen einen hohen Reinheitsgrad der erzeugten Produkte gewährleisten. Hierfür wird periodisch eine gründliche Reinigung der betreffenden Aggregate durchgeführt, und zwar in der Weise, dass diese von Zeit zu Zeit mit einer mit Reinigungsmitteln angereicherten Reinigungsflüssigkeit durchgespült werden. Hierbei erfolgt die Zuführung der Reinigungsmittel mittels einer konstruktiv und steuerungstechnisch aufwendigen Dosierschnecke, die mit einer ebenso aufwendigen Dosierschranke zusammenwirkt.

In der Druckschrift DE 10 2006 060 745 ist eine Heissgetränkemaschine mit einem Reinigungs- bzw. Entkalkungsprogramm geoffenbart, bei der in eine Halterung ein Servicefunktionsobjekt einsteckbar ist. Letztere weist zwei Service-Discs und im Mittelbereich zwei Kapselbereiche auf. Diese Einsteckbarkeit des Servicefunktionsobjekt dient jedoch ausschliesslich zur Aufbewahrung, so dass sie jederzeit griffbereit sind. Es sind zwar Kapselbereiche erwähnt, die aber nicht spezifiziert sind.

Gemäss der Entgegenhaltung EP-A-1 210 894 ist bei einer Getränkemaschine eine Dosiereinrichtung für das Reinigungsmittel vorgesehen, bei weicher Reinigungsmittel in Form von Granulat oder kleinen Tabletten zugeführt werden können, die in einem Vorratsbehälter aufgenommen sind. Mittels eines Dosierrades wird das Reinigungsmittel portionenweise in Dosierkammern an seinem Umfang verteilt gefüllt und dann durch eine Auslassöffnung weitergeleitet. In dieser Auslassöffnung ist eine Absperreinrichtung vorgesehen, welche die Reinigungsmittel-Portionen freigibt oder zurückhält. Ferner ist ein Sensor in Form einer Lichtschranke vorhanden, mittels dem festgestellt werden kann, ob sich im Auslauf Reinigungsmittel befindet. Damit ist eine aufwändige Einrichtung vorgesehen.

Der Erfindung liegt die Aufgabe zugrunde, die Zuführung der Reinigungsmittel mit einer möglichst einfachen Vorrichtung zu bewerkstelligen, die funktionssicher arbeitet und leicht handhabbar ist.

Diese Aufgabe wird erfindungsgemäss durch die Merkmale von Anspruch 1 gelöst, wobei im Reinigungskreislauf ein in zwei Betriebsstellungen schaltbarer Reinigungsschlüssel mit einer Vorratskammer für das Reinigungsmittel eingebaut ist, wobei die Vorratskammer in der einen Betriebsstellung gesperrt, während sie in der anderen Betriebsstellung entsperrt und bei Bedarf in eine frei zugängliche Lage versetzbar ist. In dieser Lage kann sie bequem mit dem jeweils vorgesehenen Reinigungsmittel aufgefüllt werden. Mit Hilfe des Reinigungsschlüssels lässt sich auch beispielsweise sicherstellen, dass die Operation nur von dazu berechtigtem Personal durchgeführt wird.

Im Sinne eines konstruktiv einfachen und funktionssicheren Aufbaus ist es gemäss der Erfindung vorgesehen, dass der Reinigungsschlüssel in ein hülsenförmiges Gehäuse einsteckbar und darin von einer Betriebsstellungen zur anderen verdrehbar ist, wobei die Vorratskammer in der einen Betriebsstellung im Gehäuse fixiert ist, während sie in der anderen Betriebsstellung gelöst und mit dem Reinigungsschlüssel aus dem Gehäuse ausziehbar ist. Um die Vorratskammer freizulegen, ist es nur erforderlich, den Reinigungsschlüssel in die letztgenannte Betriebsstellung zu bringen und ihn anschliessend aus dem Gehäuse herauszuziehen. Die Vorratskammer ist dann damit frei zugänglich und kann bequem mit dem passenden Reinigungsmittel auf- bzw. nachgefüllt werden. Zum Fixieren der Vorratskammer in der anderen Betriebsstellung ist es zweckmässig, den Reinigungsschlüssel mit Haltemitteln zu versehen, die in dieser Betriebsstellung in einer Umfangsnut des Gehäuses einrastbar ist.

Die Erfindung sieht ferner vor, dass die Vorratskammer hohlzylindrisch ausgebildet ist und mit einem seitlichen Fenster zum Einbringen des Reinigungsmittels versehen ist. Dadurch kann dieses bequem, vorzugsweise in Tablettenform, in die Vorratskammer eingebracht werden.

Es ist auch erfindungsgemäss vorgesehen, dass das Gehäuse des Reinigungsschlüssels mit seitlich angeordneten Ein- und Auslaufanschlüssen zum Zu- und Abführen der Reinigungsflüssigkeit in bzw. aus der Vorratskammer des Reinigungsschlüssels versehen ist, wobei letztere entsprechend angeordnete Umspülöffnungen aufweist, die bei gesperrter Vorratskammer mit den korrespondierenden Ein- und Auslaufanschlüssen des Gehäuses bündig sind.

Auf diese Weise wird sichergestellt, dass die Vorratskammer nur in dieser Betriebsstellung mit der Reinigungsflüssigkeit durchspülbar ist. Bei der Durchspülung der Kammer werden die dort befindlichen Reinigungstabletten in der Reinigungsflüssigkeit aufgelöst und verleihen ihr damit die jeweils gewünschten Eigenschaften.

Die Erfindung betrifft ferner ein Reinigungssystem geeignet für eine Reinigungstablette für den vorstehend vorgeschlagenen Reinigungsschlüssel, die sich Dadurch auszeichnet, dass ihre Ausgestaltung der Geometrie der Vorratskammer des Reinigungsschlüssels angepasst ist. Auf diese Weise wird sichergestellt, dass nur passend konfektionierte Tabletten einsetzbar sind, deren Beschaffenheit im Hinblick auf die angestrebte Reinigungswirkung optimal ist.

Es ist im Sinne einer einfachen Fertigung und Handhabung der Tabletten vorteilhaft, wenn diese scheibenförmig ausgebildet sind und ihr Aussendurchmesser so bemessen ist, dass sie vorzugsweise hochkantig weitgehend spielfrei in die hohlzylindrische Vorratskammer des Reinigungsschlüssels, einlegbar sind.

Im Hinblick auf die richtige Positionierung der Tabletten ist es zweckmässig, sie ringförmig auszubilden und mit einer mittleren Bohrung zu versehen, in welche ein Zentrierstift des Gehäuses weitgehend spielfrei einsteckbar ist. Diese Massnahme trägt auch dazu bei, dass nur passend konfektionierte Tabletten im Reinigungsschlüssel einsetzbar sind.

Es ist für eine Optimierung der Reinigungswirkung zweckmässig, die Tablettenstärke erfindungsgemäss so zu bemessen, dass mehrere gegebenenfalls unterschiedlich beschaffene Tabletten stapelweise in die Vorratskammer des Reinigungsschlüssels einlegbar sind. Je nach Menge und Beschaffenheit der eingesetzten Einzeltabletten ist die Reinigungswirkung innerhalb breiter Grenzen einstellbar.

Die Erfindung wird nachfolgend anhand eines Ausführungsbeispiels unter Bezugnahme auf die Zeichnung näher erläutert. Es zeigen:
- Fig. 1: einen Reinigungskreislauf mit einem erfindungsgemässen Reinigungsschlüssel für das Milchaggregat einer Kaffeemaschine, schematisch dargestellt,
- Fig. 2: den Reinigungskreislauf nach Fig. 1, in der Auffüllphase des Reinigungsweges dargestellt,
- Fig. 3: den Reinigungskreislauf nach Fig. 1, in der Entleerungsphase des Reinigungsweges dargestellt,
- Fig. 4: den Reinigungskreislauf nach Fig. 1, in der Spülphase des Produktweges dargestellt,
- Fig. 5: den erfindungsgemässen Reinigungsschlüssel, im eingebauten Zustand und perspektivisch dargestellt,
- Fig. 6a: einen Schnitt durch den Reinigungsschlüssel aus Fig. 5, in der gesperrten Betriebsstellung dargestellt,
- Fig. 6b: den Reinigungsschlüssel gemäss Fig. 5 in der gesperrten Betriebsstellung, perspektivisch dargestellt,
- Fig. 7a: einen Schnitt durch den Reinigungsschlüssel aus Fig. 5, in der entsperrten Betriebsstellung dargestellt,
- Fig. 7b: den Reinigungsschlüssel aus Fig. 5 in der entsperrten Betriebsstellung, perspektivisch dargestellt,
- Fig. 8: den Reinigungsschlüssel aus den Fig. 6 und Fig. 7 mit leerer Vorratskammer, vereinfacht und perspektivisch dargestellt,
- Fig. 9: den Reinigungsschlüssel aus Fig. 8 mit aufgefüllter Vorratskammer, ebenfalls vereinfacht und perspektivisch dargestellt, und
- Fig. 10: eine ringförmige Reinigungstablette für den Reinigungsschlüsel nach den Fig. 5 bis 9.

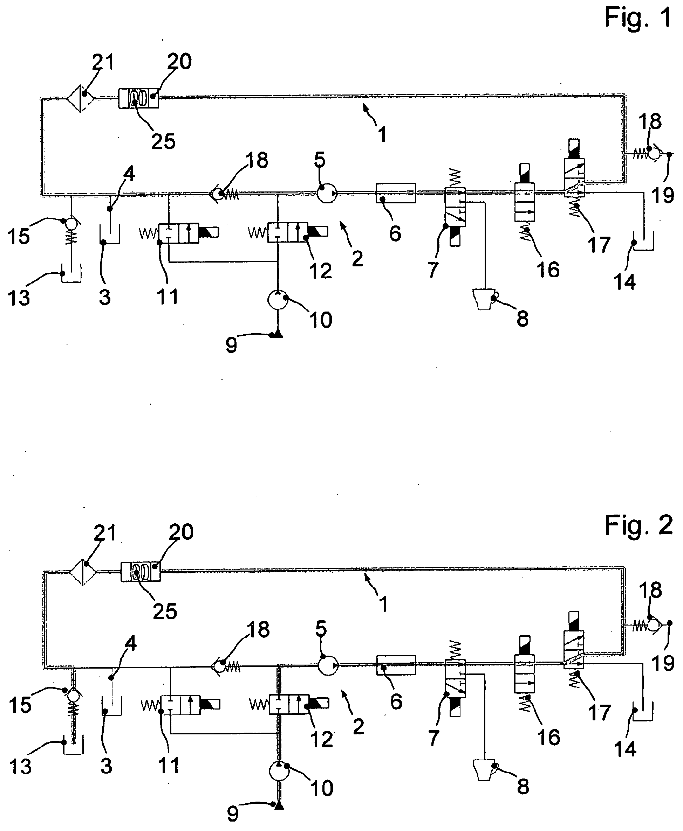

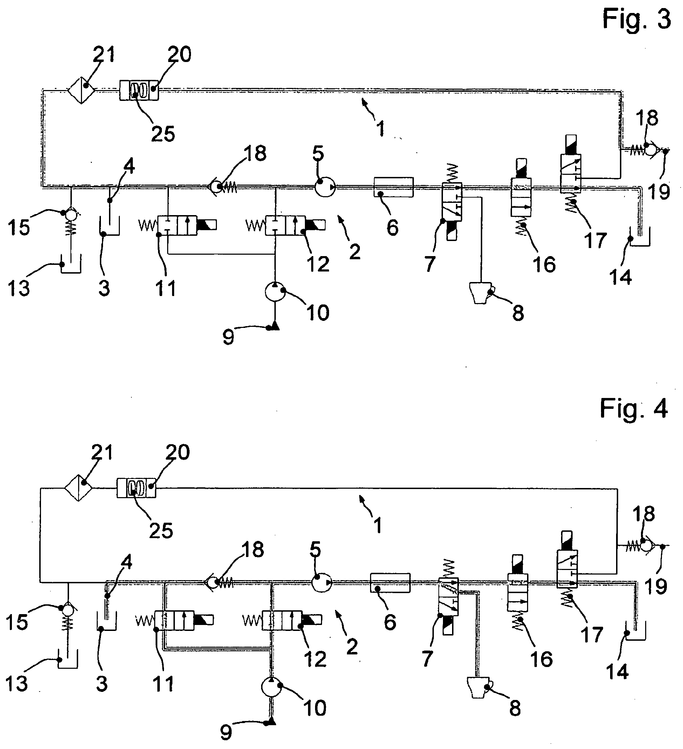

Der Reinigungskreislauf 1 nach Fig. 1 bis Fig. 4 dient zum periodischen Reinigen eines Milchaggregates 2 zum Erzeugen erhitzter Milch, Milchschaum oder milchhaltiger Getränke. Das Aggregat 2 ist mit einem Milchtank 3, einer Ansauglanze 4, einer Milchpumpe 5, einer Milcherhitzungseinrichtung 6, einem Milchauslaufventil 7 und einer Milch-Entnahmestelle 8 ausgestattet. Zum Reinigungskreislauf 1 gehören auch ein Wassernetzanschluss 9 und eine Wasserpumpe 10 mit Wegeventilen 11 und 12, sowie zwei Wasserabflussstellen 13 und 14 vor und hinter dem Milchaggregat 2, denen ein Rückschlagventil 15 bzw. Wegeventile 16 und 17 vorgeschaltet sind. Weitere Rückschlagventile 18 sind ferner zwischen den Wegeventilen 11 und 12 sowie in einer Abzweigleitung 19 angeordnet.

Im Reinigungskreislauf 1 ist auch erfindungsgemäss ein Reinigungsschlüssel 20 eingebaut, mit welchem der Reinigungsflüssigkeit ein Reinigungsmittel, vorzugsweise in Tablettenform, zuführbar ist. Dem Reinigungsschlüssel 20 ist ein Sieb oder Filter 21 vorgeschaltet.

Die Arbeitsweise des Reinigungskreislaufes 1 ist aus Fig. 1 bis Fig. 4 ableitbar. Da sie Stand der Technik ist, erübrigt es sich auch, auf dessen Wirkungsweise näher einzugehen.

Der erfindungsgemässe Reinigungsschlüssel 20 steckt in einem hülsenförmigen Gehäuse 22, der seinerseits in einer gut zugänglichen Stelle der Maschine, etwa im Milch-Kühlschrank befestigt ist.

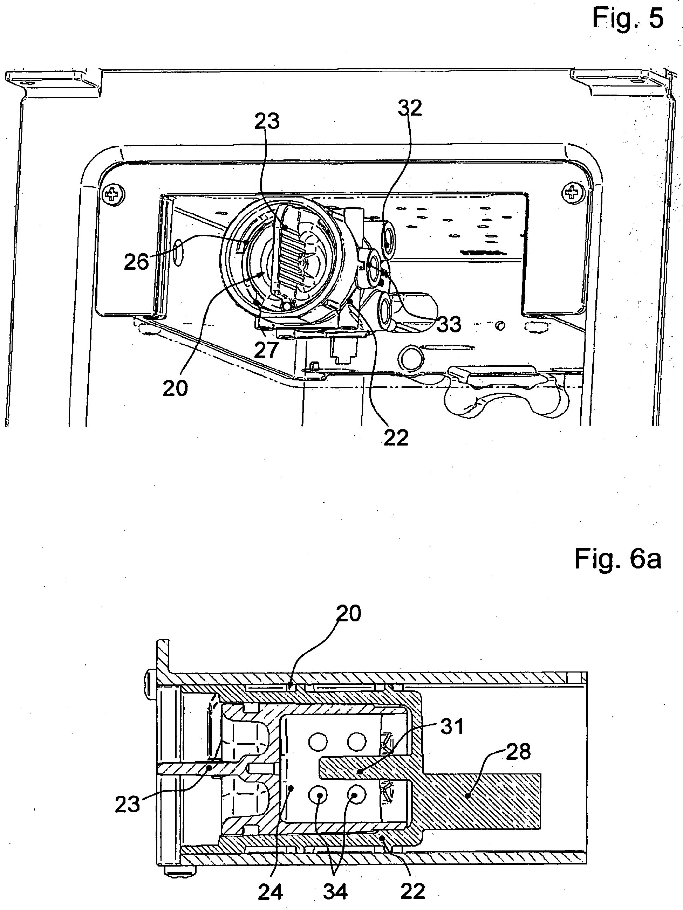

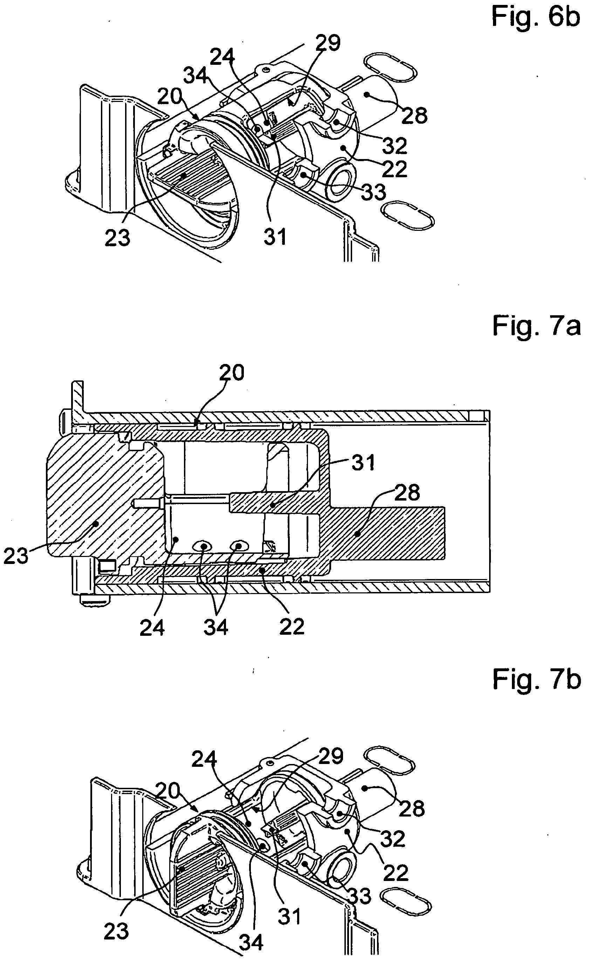

Der Reinigungsschlüssel 20 weist einen Flügelkopf 23 auf, mit dem er im Gehäuse 22 zwischen zwei drehwinkelbestimmten Betriebsstellungen verdrehbar ist. Der Reinigungsschlüssel 20 besitzt ferner eine Vorratskammer 24 zur Aufnahme von Reinigungstabletten 25, die sich während des Reinigungsvorgangs in der Reinigungsflüssigkeit auflösen können. Der Reinigungsschlüssel 20 befindet sich dann in der Betriebsstellung gemäss den Fig. 6a bzw. Fig. 6b, in welcher die Vorratskammer 24 im Gehäuse 22 mit einem in dessen Umfangsnut 26 einrastenden Haltemittel 27 fixiert ist. In der Betriebsstellung gemäss den Fig. 7a bzw. Fig. 7b ist die Vorratskammer 24 dagegen gelöst und kann durch Ausziehen des Reinigungsschlüssels 20 aus dem Gehäuse 22 entfernt werden. Am Gehäuse 22 ist rückseitig ein Sensorengerät 28 angebracht. Dieses ist Bestandteil der Steuerungsanlage der Maschine.

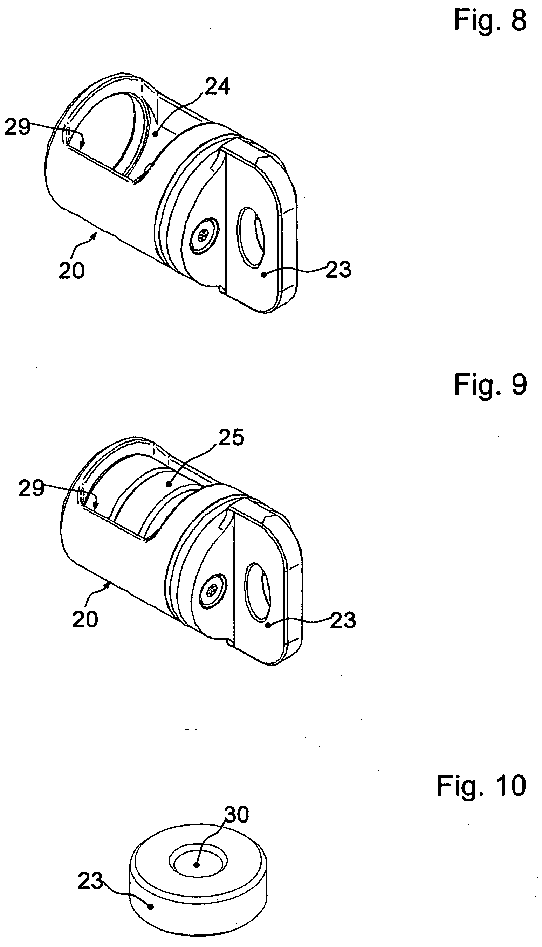

Wie insbesondere aus den Fig. 8 und Fig. 9 ersichtlich, ist die Vorratskammer 24 des Reinigungsschlüssels 20 hohlzylindrisch ausgebildet und weist ein seitliches Fenster 29 auf, durch welches bei Bedarf die Reinigungstabletten 25 in die Vorratskammer 24 eingelegt werden. Um diese Operation zu erleichtern, ist das Fenster rückseitig geringfügig aufgeweitet. Die Reinigungstabletten 25 sind scheibenförmig ausgebildet und umfangsmässig der Geometrie der Vorratskammer 24 angepasst. Somit können sie hochkantig weitgehend spielfrei in die hohlzylindrische Vorratskammer 24 eingelegt werden.

Die Reinigungstabletten 25 sind zudem ringförmig ausgebildet und weisen eine zentrale Bohrung 30 auf, in welche ein Zentrierstift 31 des Gehäuses 22 weitgehend spielfrei einsteckbar ist. Ihre Tablettenstärke ist so bemessen, dass mehrere gegebenenfalls unterschiedlich beschaffene Tabletten stapelweise in die Vorratskammer 24 einlegbar sind.

In Fig. 9 ist eine solche Tablettenanordnung veranschaulicht. Der Zentrierstift 31 dient dazu, die Tabletten zentriert in der Vorratskammer 24 festzuhalten. Die Reinigungswirkung der Tabletten ist abhängig von der Anzahl und Beschaffenheit der verwendeten Tabletten.

Es ist selbstverständlich im Rahmen der Erfindung möglich, auch anders konfigurierte Reinigungstabletten zu verwenden, soweit ihre Konfiguration der Geometrie der Vorratskammer des Reinigungsschlüssels angepasst ist.

Am Gehäuse 22 des Schlüssels sind Ein- und Auslaufstutzen 32, 33 angebracht, an welche die Zu- und Abteilungen des Reinigungskreislaufes 1 anschliessbar sind. Die Vorratskammer 24 ist ihrerseits mit entsprechend angeordneten Umspülöffnungen 34 versehen, die bei gesperrter Vorratskammer mit den korrespondierenden Ein- und Auslaufstutzen 32, 33 des Gehäuses bündig sind. Dadurch wird dann der Innenraum der Kammer durchgespült, damit die dort befindlichen Reinigungstabletten sich in der Reinigungsflüssigkeit auflösen können.

Der erfindungsgemässe Reinigungssystem mit Reinigungsschlüssel 20 ist leicht durch Verdrehen des Schlüsselkopfes 23 umschaltbar. In der einen Schaltstellung gewährleistet er einen sicheren Betrieb, während das Milchaggregat abgespült wird. Und in der anderen Schaltstellung ermöglicht er die Freilegung der Vorratskammer 24, damit diese zum Auf- oder Nachfüllen derselben mit den Reinigungstabletten 25 zugänglich wird. Danach wird der Reinigungsschlüssel 20 wieder in das Gehäuse 22 eingesteckt und mit dem Schlüsselkopf 23 in die ursprüngliche Schaftstellung umgeschaltet.

Das Sensorengerät 28 signalisiert einerseits die jeweils aktive Betriebsstellung und andererseits den Füllstand der Vorratskammer 24. Beide Signale sind wichtig für die Steuerung der Arbeitsweise des Systems. Durch entsprechende Kodierung des Schlüssels lässt sich auch mit dem Gerät sicherstellen, dass die Betätigung des Schlüssels nur von dazu berechtigtem Personal durchgeführt wird.

Die Erfindung ist mit dem erläuterten Ausführungsbeispiel ausreichend dargetan. Sie könnte aber noch in weiteren Varianten veranschaulicht sein.

## Patentansprüche

1. Reinigungssystem für eine Kaffeemaschine oder eine ähnliche Einrichtung, mit einem Gehäuse (22), in welches für einen Reinigungsvorgang einer Reinigungsflüssigkeit ein vorzugsweise lösliches Reinigungsmittel (25) zuführbar ist,
**dadurch gekennzeichnet, dass**
ein Reinigungsschüssel (20) mit einer Vorratskammer (24) für das Reinigungsmittel (25) vorgesehen ist, welcher in das Gehäuse (22) einsteckbar bzw. ausziehbar ist, wobei die Vorratskammer (24) hohlzylindrisch ausgebildet und mit dem seitlichen Fenster (29) zum Einbringen des Reinigungsmittels (25) versehen ist.

2. Reinigungssystem nach Anspruch 1, **dadurch gekennzeichnet, dass**
der Reinigungsschlüssel (20) in ein hülsenförmiges Gehäuse (22) einsteckbar und darin von einer Betriebsstellung zur anderen verdrehbar ist, wobei die Vorratskammer (24) in der einen Betriebsstellung im Gehäuse (22) fixiert, indes in der anderen Betriebstellung gelöst und mit dem Reinigungsschlüssel (20) aus dem Gehäuse (22) ausziehbar ist.

3. Reinigungssystem nach Anspruch 2, **dadurch gekennzeichnet, dass**
der Reinigungsschlüssel (20) mit Haltemitteln (27) versehen ist, die in der einen Betriebsstellung in einer Umfangsnut (26) des Gehäuses (22) einrastbar sind.

4. Reinigungssystem nach einem der Ansprüche 1 bis 3, **dadurch gekennzeichnet, dass**
das Gehäuse (22) des Reinigungsschlüssels mit seitlich angeordneten Ein- und Auslaufanschlüssen (32, 33) zum Zu- und Abführen der Reinigungsflüssigkeit in bzw. aus der Vorratskammer (24) versehen ist, wobei letztere entsprechend angeordnete Umspülöffnungen (34) aufweist, die bei gesperrter Vorratskammer mit den korrespondierenden Ein- und Auslaufanschlüssen des Gehäuses (22) bündig sind.

5. Reinigungssystem nach einem der Ansprüche 1 bis 4, **dadurch gekennzeichnet, dass**
am Gehäuse (22) rückseitig ein in der Systemsteuerung integriertes Sensorengerät (28) angebracht ist.

6. Reinigungssystem nach einem der Ansprüche 1 bis 5, **dadurch gekennzeichnet, dass**
das Reinigungsmittel (25) in die Vorratskammer (24) in Tablettenform einlegbar ist.

7. Reinigungssystem nach Anspruch 6, **dadurch gekennzeichnet, dass**
die Ausgestaltung der Reinigungstablette (25) der Geometrie der Vorratskammer (24) des Reinigungsschlüssels (20) angepasst ist, wobei sie scheibenförmig ausgebildet ist und ihr Aussendurchmesser so bemessen ist, dass sie vorzugsweise hochkantig weitgehend spielfrei in die hohlzylindrische Vorratskammer (24) des Reinigungsschlüssels (20) einlegbar ist.

8. Reinigungssystem nach Anspruch 7, **dadurch gekennzeichnet, dass** die Reinigungstablette
ringförmig ausgebildet ist und mit einer mittleren Bohrung (30) versehen ist, in welche ein Zentrierstift (28) des Gehäuses (22) weitgehend
spielfrei einsteckbar ist.

9. Reinigungssystem nach Anspruch 7 oder 8, **dadurch gekennzeichnet, dass**
die Tablettenstärke so bemessen ist, dass mehrere gegebenenfalls unterschiedlich beschaffene Tabletten (25) stapelweise in die Vorratskammer (24) des Reinigungsschlüssels (20) einlegbar sind.

## Claims

1. Cleaning system for a coffee machine or a similar device, comprising a housing (22), into which a preferably soluble cleaning agent (25) can be delivered for a cleaning process of a cleaning liquid, **characterised in that** a cleaning key (20) is provided with a storage chamber (24) for the cleaning agent (25), which can be inserted in respectively removed from the housing (22), wherein the storage chamber (24) is hollow cylindrical in form and is provided with a side window (29) for introduction of the cleaning agent (25).

2. Cleaning system according to Claim 1, **characterised in that** the cleaning key (20) can be inserted into a sleeve-shaped housing (22) and in the latter can be turned from one operating position to the other, wherein the storage chamber (24) in the one operating position being fixed in the housing (22), while in the other operating position it is released and can be removed with the cleaning key (20) from the housing (22).

3. Cleaning system according to Claim 2, **characterised in that** the cleaning key (20) is provided with holding means (27), which in the one operating position can be engaged in a circumferential groove (26) of the housing (22).

4. Cleaning system according to any of the Claims 1 to 3, **characterised in that**
the housing (22) of the cleaning key is provided with inlet and outlet connections (32, 33), arranged on the side, for delivering and discharging the cleaning liquid to and from the storage chamber (24), the latter having appropriately arranged flushing openings (34) which, with the storage chamber blocked, are flush with the corresponding inlet and outlet connections of the housing (22).

5. Cleaning system according to any of the Claims 1 to 4, **characterised in that**
a sensor device (28) integrated into the system control is applied to the rear side of the housing (22).

6. Cleaning system according to any of the Claims 1 to 5, **characterised in that**
the cleaning agent (25) can be inserted in the storage chamber (24) in tablet form.

7. Cleaning system according to Claim 6, **characterised in that**
the configuration of the cleaning tablet (25) is matched to the geometry of the storage chamber (24) of the cleaning key (20), in which it is shaped as a disc and its outer diameter is determined such that it can preferably be inserted upright and to a large extent without any play in the hollow cylindrical storage chamber (24) of the cleaning key (20).

8. Cleaning system according to Claim 7, **characterised in that**
the cleaning tablet it is annular in form and is provided with a central bore hole (30), into which a centring pin (28) of the housing (22) can be inserted to a large extent without any play.

9. Cleaning system according to Claim 7 or 8, **characterised in that**
the tablet thickness is determined such that a number of tablets (25), optionally made differently, can be stacked in the storage chamber (24) of the cleaning key (20).

## Revendications

1. Système de nettoyage pour une machine à café ou pour un dispositif analogue, comprenant un boîtier (22) dans lequel un agent (25) de nettoyage, de préférence soluble, peut être apporté pour une opération de nettoyage à un liquide de nettoyage,
**caractérisé en ce que**
il est prévu une bassine (20) de nettoyage, ayant une chambre (24) formant un réservoir pour l'agent (25) de nettoyage et pouvant être enfichée dans le boîtier (22) ou en être retirée, la chambre (24) formant réservoir étant constituée sous la forme d'un cylindre creux et étant pourvue de la fenêtre (29) latérale pour introduire l'agent (25) de nettoyage.

2. Système de nettoyage suivant la revendication 1, **caractérisé en ce que**
la bassine (20) de nettoyage peut être rentrée dans un boîtier (22) en forme de manchon et y être tournée d'une position de fonctionnement à une autre, la chambre (24) formant réservoir étant dans une position de fonctionnement, immobilisée dans le boîtier (22), tandis que, dans l'autre position de fonctionnement, elle en est détachée et peut avec la bassine (20) de nettoyage être retirée du boîtier (22).

3. Système de nettoyage suivant la revendication 2, **caractérisé en ce que**
la bassine (20) de nettoyage est pourvue de moyens (27) de maintien, qui peuvent être encliquetés, dans la une position de fonctionnement, dans une rainure (28) périphérique du boîtier (22).

4. Système de nettoyage suivant l'une des revendications 1 à 3, **caractérisé en ce que**
le boîtier (22) de la bassine de nettoyage est pourvu de raccords (32, 33) d'entrée et de sortie disposés latéralement pour l'apport et l'évacuation du liquide de nettoyage dans la chambre (24) formant réservoir et hors de celle-ci, cette dernière ayant des ouvertures (34) de lavage disposées de manière adéquate qui, lorsque la chambre formant réservoir est fermée, sont en alignement avec les raccords d'entrée et de sortie correspondants du boîtier (22).

5. Système de nettoyage suivant l'une des revendications 1 à 4, **caractérisé en ce qu'**
il est mis sur le boîtier (22), du côté arrière, un appareil (28) de sonde intégré à la commande du système.

6. Système de nettoyage suivant l'une des revendications 1 à 5, **caractérisé en ce que**
l'agent (25) de nettoyage peut être mis sous la forme d'une pastille dans la chambre (24) formant réservoir.

7. Système de nettoyage suivant la revendication 6, **caractérisé en ce que**
la conformation de la pastille (25) de nettoyage est adaptée à la géométrie de la chambre (24) formant réservoir de la bassine (20) de nettoyage, la chambre étant en forme de disque et son diamètre extérieur ayant des dimensions telles qu'elle peut être mise de préférence sur chant sensiblement sans jeu dans la chambre (24) cylindrique creuse formant réservoir de la bassine (20) de nettoyage.

8. Système de nettoyage suivant la revendication 7, **caractérisé en ce que**
la pastille de nettoyage est constituée sous la forme d'un anneau et est pourvue d'un trou (30) au milieu, dans lequel une broche (28) de centrage du boîtier (22) peut entrer dans une grande mesure sans jeu.

9. Système de nettoyage suivant la revendication 7 ou 8, **caractérisé en ce que**
l'épaisseur de la pastille est telle que plusieurs pastilles (25), le cas échéant de constitution différente, peuvent être insérées à la manière d'une pile dans la chambre (24) formant réservoir de la bassine (20) de nettoyage.
